# EUROPÄISCHE PATENTSCHRIFT

(11) **EP 2 366 891 B1**
(45) Veröffentlichungstag und Bekanntmachung des Hinweises auf die Patenterteilung: **23.07.2014**
(21) Anmeldenummer: 10002871.1
(22) Anmeldetag: 18.03.2010
(51) Int. Cl.: F03D 1/06

(54) **Windenergieanlagenrotorblatt**
Wind turbine rotor blade
Pale de rotor d'éolienne

(43) Veröffentlichungstag der Anmeldung: 21.09.2011
(73) Patentinhaber: Nordex Energy GmbH, 22848 Norderstedt (DE)
(72) Erfinder: Fischer, Gunter, 22081 Hamburg (DE); Rochholz, Hermann, 22848 Norderstedt (DE)
(74) Vertreter: Hauck Patent- und Rechtsanwälte

(56) Entgegenhaltungen:
- EP-A1- 1 845 258
- WO-A1-02/08600
- WO-A1-2004/097215
- WO-A1-2007/071249
- WO-A2-2010/013024
- DE-A1-102006 017 897
- US-A- 4 976 587

## Beschreibung

Die Erfindung betrifft ein Windenergieanlagenrotorblatt mit einer Blattspitze, einer Blattwurzel, einer Vorderkante, einer Hinterkante, einer Druckseite, einer Saugseite und einem Querschnitt, der sich von der Blattspitze zur Blattwurzel hin ändert, wobei der Querschnitt in der Mitte des Rotorblatts von einem aerodynamischen Profil gebildet und an der Blattwurzel im Wesentlichen kreisförmig ist. Derartige Rotorblätter werden insbesondere für Windenergieanlagen mit einem zwei- oder dreiblättrigen Rotor mit horizontaler Achse genutzt. Sie sind an ihrer Blattwurzel mit einer Nabe des Rotors verbunden. Dabei kann an der Blattwurzel des Rotorblatts ein Befestigungsflansch ausgebildet und der Pitchwinkel des Blatts mit Hilfe eines Pitchantriebs verstellbar ausgeführt sein.

Bekannte Rotorblätter stellen einen Kompromiss aus der aerodynamischen Optimalform, den Erfordernissen der Festigkeitsauslegung und dem Bestreben einer rationellen Herstellungstechnik dar. Insbesondere die relative Dicke der verwendeten aerodynamischen Profile muss unter Festigkeitsgesichtspunkten gewählt werden. Dabei kann im aerodynamisch besonders wichtigen Außenbereich der Rotorblätter mit einer relativ geringen Blattdicke von weniger als 30 % der Profiltiefe, häufig zwischen 18 % und 15 % derselben, gearbeitet werden. Der weiter zur Nabe hin liegende Innenbereich der Rotorblätter spielt aerodynamisch eine weniger entscheidende Rolle, so dass zur Erreichung einer ausreichenden Festigkeit stärker vom aerodynamischen Optimum abgewichen und eine relativ große Blattdicke verwirklicht werden kann. Zur Blattwurzel hin geht das aerodynamische Profil dann in den im Wesentlichen kreisförmigen Querschnitt über. Um die aerodynamische Leistung der Rotorblätter im Innenbereich zu verbessern, sind aus dem Stand der Technik unterschiedliche Ansätze bekannt.

Aus der Druckschrift WO 02/08600 A1 ist die Verwendung eines rippenförmigen, sich in Längsrichtung entlang der Hinterkante des Rotorblatts erstreckenden Anbauteils bekannt. Das Anbauteil befindet sich vorwiegend in einem zylindrischen Verbindungsbereich des Rotorblatts, welcher einen weiter außen angeordneten, mit einem aerodynamischen Profil versehenen Rotorblattabschnitt mit der Nabe verbindet. Auf diese Weise trägt auch der andernfalls aerodynamisch nicht wirksame Verbindungsbereich zur Leistungsfähigkeit des Rotors bei.

Aus der Druckschrift DE 10 2006 017 897 B4 ist ein Rotorblatt für eine Windenergieanlage mit einer Aufsatzvorrichtung auf der Druckseite nahe der Blattwurzel bekannt. Die bekannte Aufsatzvorrichtung erstreckt sich im Wesentlichen in Längsrichtung des Rotorblatts. Eine sogenannte Aufsatzanströmfläche der bekannten Aufsatzvorrichtung beginnt auf der Druckseite an einem Punkt des Profils, in dem eine an das Profil angelegte Tangente in einem Winkelbereich von -20° bis +20° zur Auslegungsanströmrichtung verläuft. Die Aufsatzanströmfläche verläuft ungefähr im Winkel dieser Tangente bis zu einer von der Rotorblatthinterkante verschiedenen Hinterkante der Aufsatzvorrichtung, an die sich eine hintere Fläche der Aufsatzvorrichtung anschließt, die zur Druckseite des Profils zurückführt. Vergleichbare Aufsatzvorrichtungen sind auch aus den Druckschriften EP 2 138 714 A1 und EP 2 141 358 A1 bekannt.

Aus der Druckschrift WO 2004/097215 A1 ist ein Rotorblatt einer Windenergieanlage bekannt, das speziell für eine getriebelose Windenergieanlage konzipiert ist. Derartige Windenergieanlagen weisen eine Nabe mit relativ großem Durchmesser auf. Bei diesem bekannten Rotorblatt wird das aerodynamische Profil des Rotorblatts im Wesentlichen bis an die Nabe heran fortgesetzt, was wegen der aus Festigkeitsgründen erforderlichen, großen Profildicke nahe der Nabe zu einer sehr großen Profiltiefe führt. Um dies zu erreichen, wird der hintere Bereich des Profils dort von einem Anbauteil gebildet. Aus der Druckschrift EP 1 845 258 A1 ist ein Windenergieanlagenrotorblatt bekannt, dessen Querschnitt in einem Übergangsbereich zwischen einer kreisförmigen Blattwurzel und einem aerodynamischen Profil einen konkaven Druckseitenergänzungsabschnitt aufweist. Das hintere Ende dieses Druckseitenergänzungsabschnitts ist mit einem geraden Abschnitt, der senkrecht zur Profilsehne ausgerichtet ist und ebenfalls zur Druckseite gehört, mit der Hinterkante verbunden. Die Saugseite des bekannten Rotorblatts wird von der Vorderkante bis zur Hinterkante von einem konvexen Abschnitt gebildet, der an der Hinterkante unter Ausbildung eines nach außen weisenden Knicks in den geraden Abschnitt übergeht.

Aus der Druckschrift WO 2010/013024 A1 ist ein Rotorblatt für eine Windenergieanlage mit einem Rotorblatt-Ergänzungsteil bekannt geworden. Das Rotorblatt-Ergänzungsteil ist im Bereich der Hinterkante eines blattwurzelseitigen Rotorblattabschnitts angesetzt. Es hat eine Rahmenkonstruktion und eine Hülle mit zwei Oberflächen, die eine Saugseite und eine Druckseite des Rotorblatt-Hauptteils fortsetzen.

US Patent Nr. 4,976,587 betrifft ein Rotorblatt mit einem NASA LS(1)-04xx-Profil. Diese Profile weisen eine vollständig konvex gekrümmte Saugseite auf.

Aus dem Dokument WO 2007/071249 A1 sind weitere Profile eines Rotorblatts bekannt. Davon ausgehend ist es die Aufgabe der Erfindung, ein Windenergieanlagenrotorblatt zur Verfügung zu stellen, das einfach hergestellt werden kann und insbesondere im Innenbereich des Rotors eine verbesserte Leistung erzielt.

Diese Aufgabe wird gelöst durch das Windenergicanlagenrotorblatt mit den Merkmalen des Anspruchs 1. Vorteilhafte Ausgestaltungen sind in den sich anschließenden Unteransprüchen angegeben.

Das erfindungsgemäße Windenergieanlagenrotorblatt hat eine Blattspitze, eine Blattwurzel, eine Vorderkante, eine Hinterkante, eine Druckseite, eine Saugseite und einen Querschnitt, der sich von der Blattspitze zur Blattwurzel hin ändert, wobei der Querschnitt in der Mitte des Rotorblatts von einem aerodynamischen Profil gebildet und an der Blattwurzel im Wesentlichen kreisförmig ist. In einem Längsabschnitt des Rotorblatts, der zwischen der Blattwurzel und der Mitte des Rotorblatts angeordnet ist, hat es einen Querschnitt, der Folgendes aufweist:
- einen konvexen Druckseitenabschnitt, der sich von der Vorderkante bis zu einem druckseitigen Wendepunkt erstreckt,
- einen konkaven Druckseitenergänzungsabschnitt, der sich an den druckseitigen Wendepunkt mit stetiger Krümmung anschließt und sich bis zur Hinterkante erstreckt,
- einen konvex gekrümmten Saugseitenabschnitt, der sich von der Vorderkante bis zu einem saugseitigen Knick- oder Wendepunkt erstreckt, und
- einen Saugseitenergänzungsabschnitt, der sich von dem saugseitigen Knick- oder Wendepunkt bis zur Hinterkante erstreckt.

Wie jedes Windenergieanlagenrotorblatt ist das erfindungsgemäße Rotorblatt so ausgelegt, dass es bei einem bestimmten Verhältnis aus Umlaufgeschwindigkeit an der Blattspitze und Windgeschwindigkeit, d.h. bei der sogenannten Auslegungsschnelllaufzahl, und einem vorgegebenen Pitchwinkel eine optimale Leistungsaufnahme aus dem Wind ermöglicht. Wird das Rotorblatt bei der Auslegungsschnelllaufzahl betrieben, strömt die Luft an jeder Längsposition des Rotorblatts in einer definierten Anströmrichtung an. Diese wird im Folgenden als Auslegungsanströmrichtung bezeichnet. An der Hinterkante laufen Saug- und Druckseite in der Regel in einem spitzen Winkel zusammen. Bei Rotorblättern mit einer sogenannten "dicken Hinterkante" befindet sich im Profil hinten ein geradliniger Abschnitt, der im Wesentlichen senkrecht zur Auslegungsanströmrichtung angeordnet ist und eine rückwärtige Fläche des Rotorblatts bildet. In diesem Fall wird die Hinterkante des Rotorblatts definitionsgemäß von den Mittelpunkten der die "dicke Hinterkante" bildenden geradlinigen Abschnitte gebildet. Die Vorderkante des Rotorblatts ist die am weitesten von der Hinterkante entfernte vordere Kante des Rotorblatts. Von der Vorderkante zu unterscheiden ist derjenige Punkt im vorderen Bereich des Rotorblatts, an dem die anströmende Luft sich in einen entlang der Druckseite und einen entlang der Saugseite strömenden Luftstrom teilt. Dies ist der Staupunkt. Die Lage des Staupunkts hängt im Gegensatz zur Lage der Vorderkante von den Betriebsbedingungen des Rotorblatts, insbesondere vom Pitchwinkel, ab. Die Blattwurzel ist im Wesentlichen kreisförmig und kann mit einem Befestigungsflansch zur Befestigung an einer Rotornabe versehen sein. Die Druckseite bezeichnet die zwischen Vorder- und Hinterkante befindliche Fläche des Rotorblatts, auf der im Betrieb in der Regel ein Überdruck entsteht. Entsprechend bezeichnet die Saugseite diejenige Fläche des Rotorblatts zwischen Vorderkante und Hinterkante, auf der im Betrieb in der Regel ein Unterdruck entsteht. Die Längsachse des Rotorblatts ist definiert als Gerade durch den Mittelpunkt des kreisförmigen Querschnitts an der Blattwurzel, die senkrecht zu diesem kreisförmigen Querschnitt ausgerichtet ist.

Das aerodynamische Profil in der Mitte des Rotorblatts gleicht grundsätzlich einem Tragflächenprofil eines Flugzeugs. Es weist in der Regel eine konvexe Saugseite, einen vorderen, konvexen Druckseitenabschnitt und einen hinteren, ebenfalls konvexen oder konkaven Druckseitenabschnitt auf. Die beiden genannten Druckseitenabschnitte gehen in der Regel krümmungsstetig ineinander über, d.h. ohne einen Knick, an dem sich die Richtung einer Tangente sprunghaft ändert.

In einem Längsabschnitt des Rotorblatts zwischen der Blattwurzel und der Mitte des Rotorblatts weist das Rotorblatt einen von einem herkömmlichen aerodynamischen Profil abweichenden Querschnitt auf. Dies wird durch die Begriffe "Druckseitenergänzungsabschnitt" und "Saugseitenergänzungsabschnitt" verdeutlicht. Anschaulich gesprochen stellen diese Abschnitte Ergänzungen der Druck- bzw. Saugseite eines herkömmlichen Profils dar. Darüber hinaus kommt den genannten Begriffen als solchen keine einschränkende Bedeutung zu.

Die aerodynamische Leistungsfähigkeit im Bereich des Längsabschnitts wird insbesondere verbessert durch den konkaven Druckseitenergänzungsabschnitt, der den sich auf der Druckseite aufbauenden Überdruck im hinteren Bereich des Querschnitts verstärkt. Dieser Effekt ist fachsprachlich als "rear loading" bekannt. Der konkave Druckseitenergänzungsabschnitt schließt sich krümmungsstetig an den konvexen Druckseitenabschnitt an, so dass es im Anschlussbereich nicht zu Strömungsablösungen kommt.

Der Saugseitenergänzungsabschnitt geht im Gegensatz zum Druckseitenergänzungsabschnitt nicht notwendigerweise krümmungsstetig in den davor befindlichen Saugseitenabschnitt, der konvex gekrümmt ist, über. Vielmehr befindet sich zwischen dem konvex gekrümmten Saugseitenabschnitt und dem Saugseitenergänzungsabschnitt ein Knick- oder Wendepunkt. Folgt man dem Verlauf des konvex gekrümmten Saugseitenabschnitts von der Vorderkante bis zu diesem Knick- oder Wendepunkt, liegt stets eine nach innen weisende Krümmung vor, d.h. ein an die Kurve angelegter Krümmungskreis befindet sich stets auf der zum Inneren des Profils weisenden Seite des Saugseitenabschnitts. Am Knick- oder Wendepunkt ändert diese Krümmung im Falle eines Wendepunkts ihr Vorzeichen und verläuft zunächst in entgegengesetzter Richtung, nach außen. Im Falle eines Knickpunkts ändert sich die Richtung einer an die Kurve angelegten Tangente ebenfalls, und zwar sprunghaft, wobei die Kurve am Knickpunkt nach außen abknickt. Die von den Knickpunkten aufeinanderfolgender Querschnitte gebildete Kante weist nach Innen. In beiden Fällen ändert sich die Richtung der Kurve am Knick- oder Wendepunkt bezüglich des Querschnitts nach außen.

Der Knick- oder Wendepunkt kann sich ungefähr im selben Abstand von der Vorderkante befindet wie der druckseitige Wendepunkt. Es hat sich gezeigt, dass selbst ein Knickpunkt im Querschnitt der aerodynamischen Leistungsfähigkeit des Profils nicht abträglich ist, was darauf zurückzuführen ist, dass es auf der Saugseite bei relativen Profildicken der hier betrachteten Größenordnung in der Regel selbst bei einem krümmungsstetigen Oberflächenverlauf zu Strömungsablösungen kommt. Diese können unter Umständen auch bei dem erfindungsgemäß ausgestalteten Querschnitt auftreten. Durch den Knick- oder Wendepunkt auf der Saugseite des Profils kann jedoch eine besonders materialsparende Konstruktion des Rotorblatts verwirklicht werden.

In einer Ausgestaltung beträgt der Abstand des druckseitigen Wendepunkts von der Vorderkante, gemessen entlang der Profilsehne, mehr als 60 % der Profiltiefe. Der Übergang vom konvexen Druckseitenabschnitt zum konkaven Druckseitenergänzungsabschnitt befindet sich somit relativ weit hinten, deutlich hinter der Dickenrücklage des Profils. Es hat sich gezeigt, dass der Übergang auch in einem noch größeren Abstand von der Vorderkante von beispielsweise 65 %, 70 % oder sogar 80 % der Profiltiefe erfolgen kann, ohne dass es zu Strömungsablösungen kommt. Die genannten Abstände von der Vorderkante beziehen sich jeweils auf eine Messung entlang der Profilsehne, d.h. auf die Projektion des räumlichen Abstands auf diese Richtung. Die Profilsehne ist eine geradlinige Verbindung zwischen Vorder- und Hinterkante des Profils.

In einer Ausgestaltung ist der Saugseitenergänzungsabschnitt im Wesentlichen geradlinig. Maßgeblich für die aerodynamische Wirkung des Profils ist die Anordnung und Form des konkaven Druckseitenergänzungsabschnitts und die Anordnung der Hinterkante. Die saugseitige Verbindung der Hinterkante zum konvexen Saugseitenabschnitt ist aerodynamisch wegen der bereits angesprochenen Strömungsablösungen in diesem Bereich von untergeordneter Bedeutung. Eine geradlinige Form des Saugseitenergänzungsabschnitts ist besonders einfach zu fertigen und auch aus Festigkeitsgesichtspunkten vorteilhaft.

Bei der Erfindung liegt eine Tangente an den Druckseitenergänzungsabschnitt an der Hinterkante in der Richtung der Rotorebene, wenn das Rotorblatt den für den Teillastbetrieb optimierten Pitchwinkel aufweist. Die Rotorebene ist im Wesentlichen die von dem Rotorblatt bei Rotation um die Rotorachse überstrichene Ebene. Diese Betrachtung gilt streng genommen allerdings nur bei einem senkrecht zur Rotorachse angeordneten Rotorblatt. In der Praxis kann die Längsachse des Rotorblatts auch leicht gegenüber dieser Senkrechten auf die Rotorachse geneigt sein, so dass das Rotorblatt nicht in einer Ebene, sondern auf einem Konus rotiert. Soweit jetzt und im Folgenden dennoch von der "Rotorebene" gesprochen wird, ist stets diejenige Ebene gemeint, die bei der aktuellen Drehstellung des Rotorblatts die Längsachse des Rotorblatts einschließt und eine zweite Richtung, die senkrecht zur Längsachse des Rotorblatts und senkrecht zur Rotorachse angeordnet ist. Der für den Teillastbetrieb optimierte Pitchwinkel ist derjenige Pitchwinkel, mit dem das Rotorblatt im Teillastbetrieb bevorzugt betrieben wird. Er führt zu einer optimalen Leistungsaufnahme aus dem Wind, insbesondere bei der Auslegungsschnelllaufzahl. Mit steigender Windgeschwindigkeit erhöht sich im Teillastbetrieb die aufgenommene Leistung. Bei Erreichen einer maximalen Leistung kann die Leistung nicht weiter erhöht werden. Steigt die Windgeschwindigkeit weiter an, erfolgt daher eine Verschlechterung des aerodynamischen Wirkungsgrads durch Vergrößern des Pitchwinkels. Es kann eine Regelung der Leistung durch Steuern des Pitchwinkels erfolgen, und die Anlage befindet sich im sogenannten pitchgeregelten Betrieb oder Volllastbetrieb. Bei dem für den Teillastbetrieb optimierten Pitchwinkel handelt es sich um eine eindeutig definierte Größe, die bei der Konstruktion des Rotorblatts berücksichtigt wird. Die genannte Ausrichtung der Tangente an den Druckseitenabschnitt führt dazu, dass die druckseitig um das Rotorblatt herumströmende Luft an der Hinterkante im Wesentlichen in Richtung der Rotorebene abströmt. Dadurch liefert das Rotorblatt im Bereich des erfindungsgemäßen Profils einen optimalen Drehmomentbeitrag.

Erfindungsgemäß liegt eine Tangente an den Saugseitenergänzungsabschnitt an der Hinterkante der Richtung in der Rotorebene, wenn das Rotorblatt den für den Teillastbetrieb optimierten Pitchwinkel aufweist. Auch diese Anordnung trägt zu einem optimalen Drehmoment bei, weil auch die auf der Saugseite um das Rotorblatt herumströmende Luft im Wesentlichen in Richtung der Rotorebene abströmt. Insbesondere in Verbindung mit einem geradlinigen Saugseitenergänzungsabschnitt, d.h. bei einem im Teillastbetrieb vollständig in der Rotorblattebene befindlichen Saugseitenergänzungsabschnitt gilt dies Modellrechnungen zufolge auch in Anbetracht der Strömungsablösungen, weil es häufig zur Ausbildung einer Ablösungsschicht mit annähernd gleichmäßiger Dicke oberhalb des Saugseitenergänzungsabschnitts kommt. Dieser verwirbelte Luftbereich wird durch eine Trennstromlinie von der in größerem Abstand vom Saugseitenergänzungsabschnitt laminar strömenden Luft getrennt. Verläuft der Saugseitenergänzungsabschnitt und damit auch die Trennstromlinie annähernd in der Rotorebene, strömt die laminar strömende Luft jenseits der Trennstromlinie im Wesentlichen in Richtung der Rotorebene ab, was das erzeugte Drehmoment erhöht.

In einer nicht beanspruchten Ausgestaltung ist zwischen dem Druckseitenergänzungsabschnitt und dem Saugseitenergänzungsabschnitt an der Hinterkante ein spitzer Winkel gebildet. Dies begünstigt ein glattes Abströmen der Luft an der Hinterkante gemäß der Kutta'schen Abflussbedingung.

Gemäß einer Ausgestaltung beginnt der Längsabschnitt in einem Abstand von der Blattwurzel. Zwischen Blattwurzel und Längsabschnitt kann sich beispielsweise ein Abstand von 0,5 m, 1,0 m oder mehr befinden. Innerhalb dieses Abstandsbereichs kann der Querschnitt des Rotorblatts kreisförmig wie an der Blattwurzel sein. Ein nahe der Blattwurzel angeordneter Abschnitt, an dem das Profil noch nicht wie im Längsabschnitt ausgebildet ist, vereinfacht den Transport und die Montage des Rotorblatts. Beispielsweise kann ein Gurt um diesen Abschnitt herum gelegt werden, ohne dass es zu einer Beschädigung des besonderen Profils in dem Längsabschnitt kommen kann.

Erfindungsgemäß ersteckt sich der Längsabschnitt bis zu einem Abstand von der Blattwurzel, in dem der Querschnitt eine relative Profildicke von 40% oder mehr aufweist.

In einer Ausgestaltung erstreckt sich der Längsabschnitt bis zu einem Abstand von der Blattwurzel, in dem der Querschnitt eine relative Profildicke von 60 % oder weniger aufweist. Er kann sich auch bis zu einem Querschnitt mit einer relativen Profildicke von 55 %, 50 %, oder 45 % erstrecken, so dass das verbesserte "rear loading" in einem größeren Längsabschnitt erreicht wird. Im Bereich noch geringerer relativer Profildicken bietet sich das erfindungsgemäße Profil hingegen weniger an, weil aerodynamisch gute oder bessere Ergebnisse mit einem herkömmlichen Profil erzielt werden können, ohne dass dies zu übermäßigen Profiltiefen oder sehr hohem Herstellungsaufwand führt.

In einer Ausgestaltung erstreckt sich der Längsabschnitt bis zu einem Abstand von der Blattwurzel von 10 % oder mehr der Rotorblattlänge. Der Längsabschnitt kann sich auch bis zu einem größeren Abstand von der Blattwurzel von beispielsweise 15 %, 20 %, 25 % oder sogar 30 % der Rotorblattlänge erstrecken, so dass in einem größeren Längsabschnitt von den Vorteilen der Erfindung profitiert werden kann.

In einer Ausgestaltung weist das Rotorblatt zwischen einem ersten Abstand von 10 % der Rotorblattlänge von der Blattwurzel und einem zweiten Abstand von 15 % der Rotorblattlänge von der Blattwurzel eine konstante Profiltiefe auf. Die konstante Profiltiefe kann insbesondere eine maximale Profiltiefe sein, die aufgrund von Fertigungs- oder Transportbedingungen nicht ohne weiteres überschritten werden kann. Durch die erfindungsgemäße Querschnittsgeometrie in diesem Längsbereich gelingt es, die aerodynamischen Eigenschaften zu verbessern, ohne die maximale Profiltiefe zu überschreiten. Gleichzeitig wird die maximale Profiltiefe in dem genannten Abstandsbereich optimal ausgenutzt.

In einer Ausgestaltung sind der Druckseitenergänzungsabschnitt und der Saugseitenergänzungsabschnitt von einem Anbauteil gebildet, das mit den übrigen Komponenten des Rotorblatts verbunden ist. Die übrigen Komponenten des Rotorblatts können insbesondere die Bestandteile eines herkömmlichen Rotorblatts sein, das nach Fertigstellung mit dem Anbauteil ausgerüstet wird. Das Anbauteil kann beispielsweise mit den übrigen Komponenten verschraubt und/oder verklebt sein. Dadurch können Rotorblätter bestehender Windenergieanlagen nachträglich einfach mit einem erfindungsgemäßen Längsabschnitt versehen werden.

In einer Ausgestaltung weisen die übrigen Komponenten des Rotorblatts an einer Längsposition des Rotorblatts eine maximale Profiltiefe auf, wobei das Anbauteil an dieser Längsposition beginnt und sich von dort in Richtung zu der Blattwurzel hin erstreckt. Der Längsbereich mit maximaler Profiltiefe eines herkömmlichen Rotorblatts kennzeichnet denjenigen Punkt, an dem der Übergang von einem aerodynamisch optimalen Profil zum kreisförmigen Querschnitt an der Blattwurzel beginnt. An diesem Punkt kann das Anbauteil daher besonders vorteilhaft beginnen.

In einer Ausgestaltung weisen die übrigen Komponenten des Rotorblatts an einer Längsposition des Rotorblatts eine maximale Profiltiefe auf, wobei das Anbauteil in einem größeren Abstand von der Blattwurzel beginnt als diese Längsposition, sich von dort in Richtung zu der Blattwurzel hin erstreckt und die Profiltiefe des Rotorblatts durch das Anbauteil mindestens in einem Längsabschnitt über die maximale Profiltiefe der übrigen Komponenten hinaus vergrößert wird. Die maximale Profiltiefe der übrigen Komponenten des Rotorblatts kann beispielsweise von einschränkenden Transport- oder Fertigungsbedingungen vorgegeben sein. Wird diesen übrigen Komponenten nach dem Transport bzw. der Fertigung ein Anbauteil hinzugefügt, kann dabei die maximale Profiltiefe unter Umständen ohne oder mit geringem zusätzlichen Aufwand überschritten werden. Dadurch kann mit Hilfe des Anbauteils in dem Längsabschnitt eine größere Profiltiefe genutzt werden.

In einer Ausgestaltung ist das Anbauteil in mehrere Segmente unterteilt. Dadurch ist es leichter handhab- und montierbar. Die Segmente können insbesondere in Längsrichtung des Rotorblatts aneinandergereiht sein, wobei sich zwischen zwei Segmenten jeweils ein Abstand befinden kann, der eine Relativbewegung zwischen den Segmenten ermöglicht. Der Abstand kann beispielsweise mit einem elastischen Klebstoff gefüllt sein. Dadurch wird die Verbindung des Anbauteils mit den übrigen Komponenten des Rotorblatts weniger stark beansprucht, insbesondere bei einer Verwindung dieser übrigen Komponenten unter Belastung.

In einer Ausgestaltung ist das Anbauteil schalenförmig, d.h. es besteht aus einer gekrümmten Schale mit im Wesentlichen gleichmäßiger Dicke. Eine Seite der Schale bildet den Druckseitenergänzungsabschnitt, die gegenüberliegende Seite der Schale den Saugseitenergänzungsabschnitt. Die Schale ist so mit den übrigen Komponenten des Rotorblatts verbunden, dass die Druckseite von der Druckseitenergänzungsfläche krümmungsstetig fortgesetzt wird. Diese Ausgestaltung ist konstruktiv besonders einfach umsetzbar.

Die Erfindung wird nachfolgend anhand von zwei in Figuren dargestellten Ausführungsbeispielen näher erläutert. Es zeigen:
- Fig. 1: eine Draufsicht auf die Saugseite eines erfindungsgemäßen Rotorblatts,
- Fig. 2: eine Draufsicht auf die Saugseite eines herkömmlichen Rotorblatts nach dem Stand der Technik,
- Fig. 3: eine perspektivische Ansicht eines Ausschnitts des Rotorblatts aus Fig. 1,
- Fig. 4: eine weitere perspektivische Ansicht eines Ausschnitts des Rotorblatts aus Fig. 1,
- Fig. 5: eine Draufsicht auf die Hinterkante eines Ausschnitts des Rotorblatts aus Fig. 1,
- Fig. 6: eine der Fig. 5 entsprechende Draufsicht mit weiteren Hervorhebungen,
- Fig. 7: eine Draufsicht auf die Druckseite eines Ausschnitts des Rotorblatts aus Fig. 1,
- Fig. 8: eine Draufsicht auf die Saugseite eines Ausschnitts des Rotorblatts aus Fig. 1,
- Fig. 9: einen Querschnitt durch das Rotorblatt aus Fig. 1 in einer 2 Meter von der Rotorachse entfernten Schnittebene,
- Fig. 10: einen Querschnitt durch das Rotorblatt aus Fig. 1 in einer 2,5 Meter von der Rotorachse entfernten Schnittebene,
- Fig. 11: einen Querschnitt durch das Rotorblatt aus Fig. 1 in einer 3 Meter von der Rotorachse entfernten Schnittebene,
- Fig. 12: einen Querschnitt durch das Rotorblatt aus Fig. 1 in einer 3,5 Meter von der Rotorachse entfernten Schnittebene,
- Fig. 13: einen Querschnitt durch das Rotorblatt aus Fig. 1 in einer 4 Meter von der Rotorachse entfernten Schnittebene,
- Fig. 14: einen Querschnitt durch das Rotorblatt aus Fig. 1 in einer 5 Meter von der Rotorachse entfernten Schnittebene,
- Fig. 15: einen Querschnitt durch das Rotorblatt aus Fig. 1 in einer 6 Meter von der Rotorachse entfernten Schnittebene,
- Fig. 16: einen Querschnitt durch das Rotorblatt aus Fig. 1 in einer 7 Meter von der Rotorachse entfernten Schnittebene,
- Fig. 17: einen Querschnitt durch das Rotorblatt aus Fig. 1 in einer 8 Meter von der Rotorachse entfernten Schnittebene,
- Fig. 18: einen Querschnitt durch das Rotorblatt aus Fig. 1 in einer 9 Meter von der Rotorachse entfernten Schnittebene,
- Fig. 19: einen Querschnitt durch das Rotorblatt aus Fig. 1 in einer 10 Meter von der Rotorachse entfernten Schnittebene,
- Fig. 20: die Querschnitte der Figuren 9 bis 19 in einer gemeinsamen Darstellung,
- Fig. 21: eine Darstellung der Stromlinien in einer Querschnittsebene durch das Rotorblatt gemäß Fig. 13,
- Fig. 22: einen Querschnitt durch ein weiteres Ausführungsbeispiel eines erfindungsgemäßen Rotorblatts mit einem schalenförmigen Anbauteil.

In allen Figuren werden für gleiche Teile die gleichen Bezugszeichen verwendet.

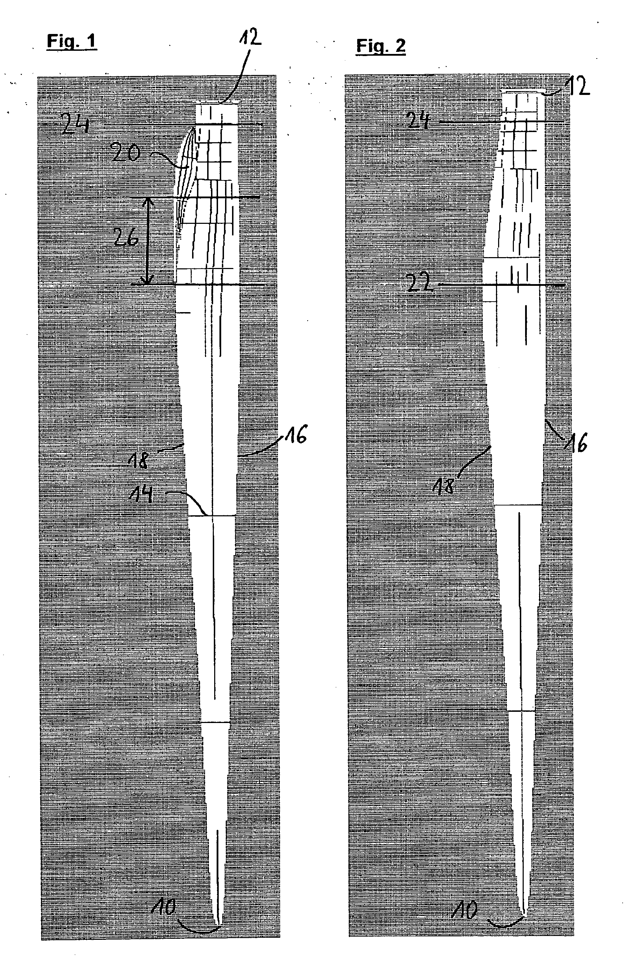

In der Fig. 1 ist das gesamte Rotorblatt in einer Draufsicht auf die Saugseite dargestellt. Es weist von der Blattspitze 10 bis zur Blattwurzel 12 eine Länge von knapp 50 Metern auf. An der Blattwurzel 12 weist das Rotorblatt einen kreisförmigen Querschnitt auf. Die Blattwurzel 12 weist einen kreisförmigen, in den Figuren nicht dargestellten Befestigungsflansch auf, der an einer Rotornabe befestigt wird. Die Blattwurzel 12 befindet sich dann in einem Abstand von ungefähr 1,5 m von der Rotorachse.

Über den Großteil seiner Länge weist das Rotorblatt im Querschnitt ein aerodynamisches Profil auf, insbesondere in der Mitte 14 des Rotorblatts. Die Vorderkante 16 des Rotorblatts befindet sich in der Darstellung der Fig. 1 im Wesentlichen am rechten Rand des dargestellten Rotorblatts, die Hinterkante 18 wird vom linken Rand des Rotorblatts gebildet.

In einem Längsabschnitt des Rotorblatts ist ein Anbauteil 20 angeordnet, das in diesem Längsabschnitt die Hinterkante 18 bildet. Die Form des Anbauteils 20 wird weiter unten im Einzelnen beschrieben.

Fig. 2 zeigt ein herkömmliches Rotorblatt nach dem Stand der Technik, das mit einem Anbauteil 20 zu einem erfindungsgemäßen Rotorblatt gemäß Fig. 1 ergänzt werden kann. Soweit die Erfindung durch Verbinden des Anbauteils 20 mit einem herkömmlichen Rotorblatt beispielsweise gemäß Fig. 2 verwirklicht wird, bildet das herkömmliche Rotorblatt im Sprachgebrauch dieser Anmeldung die übrigen Komponenten des Rotorblatts. Das Anbauteil 20 kann mit diesen übrigen Komponenten beispielsweise verklebt und/oder verschraubt werden.

Ein Vergleich der Figuren 1 und 2 zeigt, dass sich das erfindungsgemäße Rotorblatt mit Anbauteil 20 gemäß Fig. 1 unter anderem im Verlauf seiner Profiltiefe von dem herkömmlichen Rotorblatt gemäß Fig. 2 unterscheidet. Beim herkömmlichen Rotorblatt gemäß Fig. 2 nimmt die Profiltiefe beginnend von der Blattspitze 10 in Richtung zur Blattwurzel 12 hin zunächst monoton zu, bis an der mit 22 gekennzeichneten Längsposition eine maximale Profiltiefe erreicht ist. Beginnend von der Längsposition 22 nimmt die Profiltiefe zur Blattwurzel 12 hin wieder ab, wobei das aerodynamische Profil an einem mit 24 gekennzeichneten, dritten Querschnitt in den kreisförmigen Querschnitt, den es auch im Bereich der Blattwurzel 12 aufweist, übergeht. Der Übergang der Profiltiefe erfolgt kontinuierlich entlang einer stetig differenzierbaren Kurve. Bei der Erfindung gemäß Fig. 1 weist die Profiltiefe von der Blattspitze 10 bis zur Längsposition 22 mit maximaler Profiltiefe denselben Verlauf auf wie in Fig. 2. Von der Längsposition 22 zur Blattwurzel hin bleibt die Profiltiefe jedoch zunächst in dem Längsabschnitt 26 konstant, um sich danach bis auf den kreisförmigen Querschnitt zu verringern. Der Übergang vom aerodynamischen Profil zum kreisförmigen Querschnitt erfolgt wiederum an dem dritten Querschnitt 24, wobei sich die Profiltiefe an dieser Position unter Ausbildung eines Knicks ändert. Die die Hinterkante 18 beschreibende Kurve ist an diesem Punkt somit nicht stetig differenzierbar.

Der Längsabschnitt 26 mit konstanter Profiltiefe erstreckt sich ungefähr über einen Bereich zwischen einem ersten Abstand von 10 % der Rotorblattlänge von der Blattwurzel und einem zweiten Abstand von ungefähr 20 % der Rotorblattlänge von der Blattwurzel.

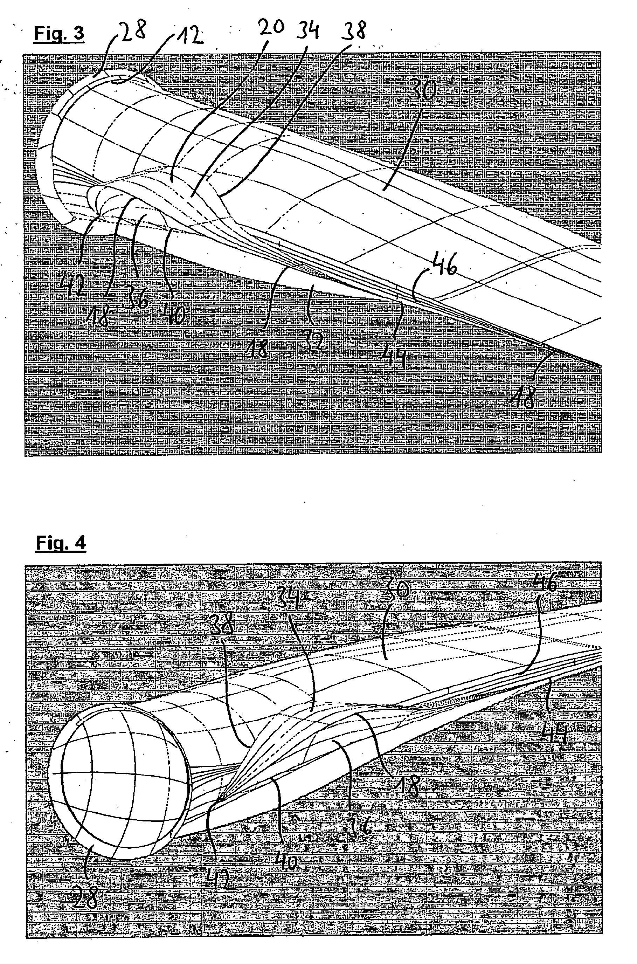

In der perspektivischen Ansicht der Fig. 3 ist die Form des Anbauteils genauer zu erkennen. Der dargestellte Ausschnitt des Rotorblatts beginnt an der Blattwurzel 12 und zeigt ungefähr das blattwurzelseitige Drittel des Rotorblatts. Die Darstellung entstammt ebenso wie die Figuren 4 bis 8 einer aerodynamischen Modellrechnung, in der die Nabe des Rotors durch eine Kugel 28 abgebildet wird. Ein Teil dieser Kugel 28 ist in den Figuren 3 bis 8 mit dargestellt, gehört jedoch nicht zum Rotorblatt. Man erkennt in der Fig. 3 den kreisförmigen Querschnitt des Rotorblatts im Bereich der Blattwurzel 12 und kann am rechten Rand der Figur das aerodynamische Profil des Rotorblatts, das im Wesentlichen demjenigen einer Flugzeugtragfläche entspricht, erahnen. Die in der Darstellung oben befindliche Seite des Rotorblatts ist die Saugseite 30, die Druckseite 32 befindet sich an der Unterseite und ist in der Fig. 3 nur teilweise sichtbar.

Ein Teil der Saugseite 30 und ein Teil der Druckseite 32 werden von dem Anbauteil 20 gebildet. Hierzu umfasst das Anbauteil 20 eine einfach konvex gekrümmte Saugseitenergänzungsfläche 34 sowie eine zweifach konkav gekrümmte Druckseitenergänzungsfläche 36. Die Saugseitenergänzungsfläche 34 und die Druckseitenergänzungsfläche 36 laufen in einer nicht beanspruchten Ausgestaltung an der Hinterkante 18 unter Ausbildung eines spitzen Winkels zusammen. Die Saugseitenergänzungsfläche 34 geht an einer gekrümmten Linie 38 in die von den übrigen Komponenten des Rotorblatts gebildeten Teile der Saugseite 30 über. Die Druckseitenergänzungsfläche 36 geht an einer weiteren gekrümmten Linie 40 in die von den übrigen Komponenten des Rotorblatts gebildeten Teile der Druckseite 32 über.

Von der Blattwurzel 12 aus betrachtet beginnt das Anbauteil 20 an einem Punkt 42, an dem die gekrümmten Linien 38 und 40 sowie die Hinterkante 18 zusammenlaufen. Das Anbauteil endet an einem weiteren Punkt 44, an dem die gekrümmten Linien 38 und 40 sowie die Hinterkante 18 ein weiteres Mal zusammenlaufen. Der Punkt 42 bildet das blattwurzelseitige Ende des Anbauteils 20. Der Punkt 44 bildet das blattspitzenseitige Ende des Anbauteils 20. Bei 46 weisen die übrigen Komponenten des Rotorblatts eine dicke Hinterkante auf, d.h. in diesem Bereich wird die Hinterkante der übrigen Komponenten des Rotorblatts von einer im Wesentlichen senkrecht zur Anströmrichtung liegenden Fläche gebildet. Im Bereich des Anbauteils 20 bildet diese Fläche jedoch nicht die Hinterkante 18 des Rotorblatts, die von dem Anbauteil 20 gebildet ist.

Statt mit Hilfe eines Anbauteils 20 kann die erfindungsgemäße Rotorblattgeometrie bereits bei der Konstruktion eines neuen Rotorblatts berücksichtigt werden. In diesem Fall können beispielsweise die Ober- und Unterschalen jeweils einteilig mit einer Saugseitenergänzungsfläche 34 und einer Druckseitenergänzungsfläche 36 gefertigt werden.

Fig. 4 zeigt eine weitere perspektivische Ansicht auf den Rotorblattausschnitt der Fig. 3. Besonders gut erkennbar ist der blattwurzelseitige Teil der Saugseitenergänzungsfläche 34, der im Punkt 42, der das blattwurzelseitige Ende des Anbauteils 20 markiert, spitz ausläuft. Ebenfalls erkennbar ist, dass die gekrümmte Linie 38, die den Übergang der Saugseitenergänzungsfläche 34 in die von den übrigen Komponenten des Rotorblatts gebildeten Teile der Saugseite 30 markiert, bezogen auf die Profiltiefe relativ weit hinten angeordnet ist. Sie befindet sich an jeder Längsposition des Rotorblatts deutlich hinter der Dickenrücklage des Profils.

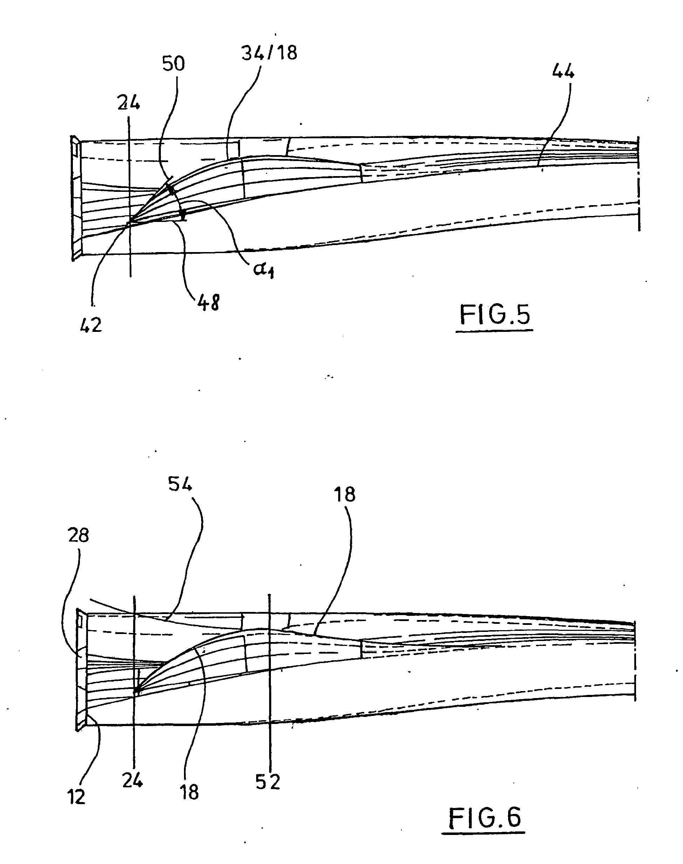

In der Draufsicht der Fig. 5 ist die Hinterkante 18 des Rotorblatts erkennbar. Soweit sie von dem Anbauteil 20 gebildet ist, verläuft die zur Hinterkante 18 führende Saugseitenergänzungsfläche 34 senkrecht zur Zeichenebene, so dass sie hinter der Hinterkante 18 verschwindet. Die Druckseitenergänzungsfläche 36 ist hingegen gut erkennbar. Ebenfalls erkennbar ist das blattwurzelseitige Ende des Anbauteils 20 am Punkt 42 sowie das blattspitzenseitige Ende des Anbauteils 20 am Punkt 44. In der Darstellung der Fig. 5 verläuft die Zeichenebene senkrecht zur Rotorebene, wobei ein Pitchwinkel des Rotorblatts entsprechend dem für den Teillastbetrieb optimierten Pitchwinkel vorausgesetzt ist. Der eingezeichnete Winkel α₁ wird in der Zeichenebene, also in einer senkrecht zur Rotorebene und parallel zur Längsachse des Rotorblatts angeordneten Ebene, gemessen. Er ist zwischen der Rotorebene, deren Richtung bei 48 angedeutet ist, und der Tangentialebene 50 definiert. Die Tangentialebene 50 ist an die Druckseite angelegt und zwar an der Hinterkante 18 am dritten Querschnitt 24, d.h. im Wesentlichen am Punkt 42. Der Winkel α₁ liegt zweckmäßigerweise in einem Bereich von 30° bis 90°. Im dargestellten Ausführungsbeispiel beträgt er ungefähr 45°.

Fig. 6 zeigt die gleiche Ansicht wie die Fig. 5, es ist jedoch der Verlauf der Hinterkante 18 hervorgehoben. In der Projektion auf die dargestellte Zeichenebene, d.h. auf eine senkrecht zur Rotorebene und parallel zur Längsachse des Rotorblatts angeordnete Ebene, steigt die Hinterkante 18 von der Blattspitze 10 ausgehend zunächst streng monoton an, bis sie an einem zweiten Querschnitt 52 ein Maximum erreicht, und fällt dann zur Blattwurzel 12 hin bis zum dritten Querschnitt 24 streng monoton ab. Im Bereich zwischen dem zweiten Querschnitt 52 und dem dritten Querschnitt 24 folgt der Verlauf der Hinterkante 18 und damit die Ausrichtung der Profilsehne nicht der sich immer weiter in Richtung zur Rotorachse hin drehenden Anströmrichtung. Eine dieser sich drehenden Anströmrichtung folgende Hinterkante würde ungefähr den bei 54 gezeigten Verlauf nehmen, wie es beispielsweise bei dem aus der eingangs diskutierten Druckschrift WO 2004/097215 A1 bekannten Rotorblatt der Fall ist.

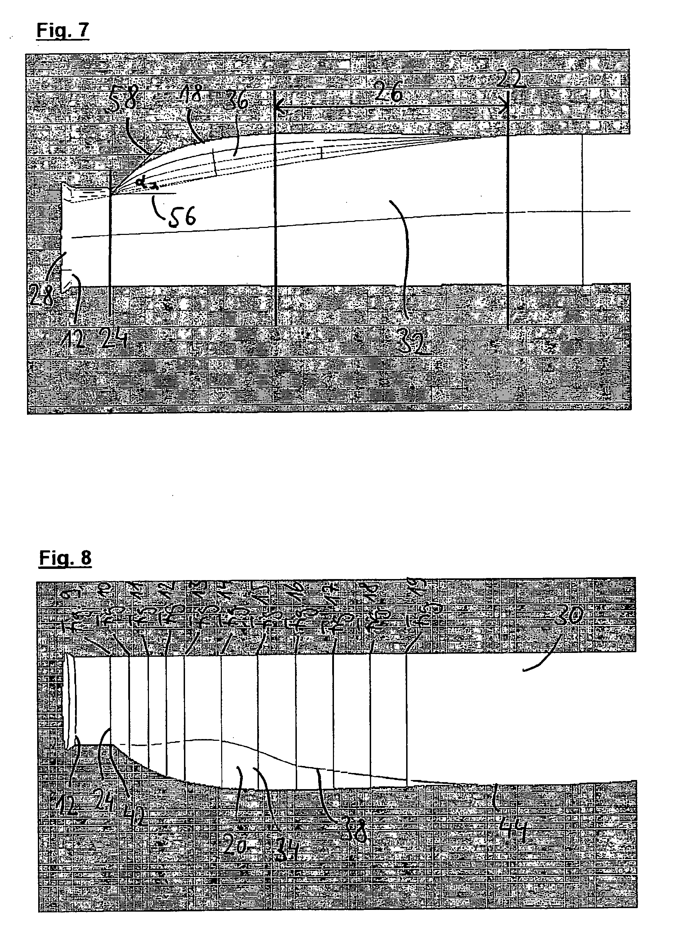

Fig. 7 zeigt eine weitere Draufsicht auf den in den vorherigen Figuren dargestellten Ausschnitt des erfindungsgemäßen Rotorblatts. Die Zeichenebene ist die Rotorebene, wobei wiederum ein Pitchwinkel entsprechend dem für den Teillastbetrieb optimierten Wert vorausgesetzt ist. Der Blick richtet sich auf die Druckseite 32 des Rotorblatts. Gut erkennbar ist der Längsabschnitt 26, in dem die Profiltiefe des Rotorblatts konstant ist.

Der eingezeichnete Winkel α₂ wird in der Zeichenebene gemessen, d.h. in der Rotorebene. Er ist definiert zwischen der Längsachse des Rotorblatts, die parallel zur Linie 56 verläuft, und der Projektion der Tangente 58 an die Hinterkante des Rotorblatts am dritten Querschnitt 24 auf die Rotorebene. Der Winkel α₂ liegt zweckmäßiger Weise in einem Bereich von 25° bis 90°. Im dargestellten Ausführungsbeispiel beträgt der Winkel α₂ ungefähr 45°. Im Gegensatz zu einem herkömmlichen Rotorblatt gemäß Fig. 2 mündet die Hinterkante 18 im Bereich des dritten Querschnitts 24 unter Ausbildung eines Winkels in den zylindrischen, blattwurzelseitigen Abschnitt des Rotorblatts, nicht in einer stetig differenzierbaren Kurve.

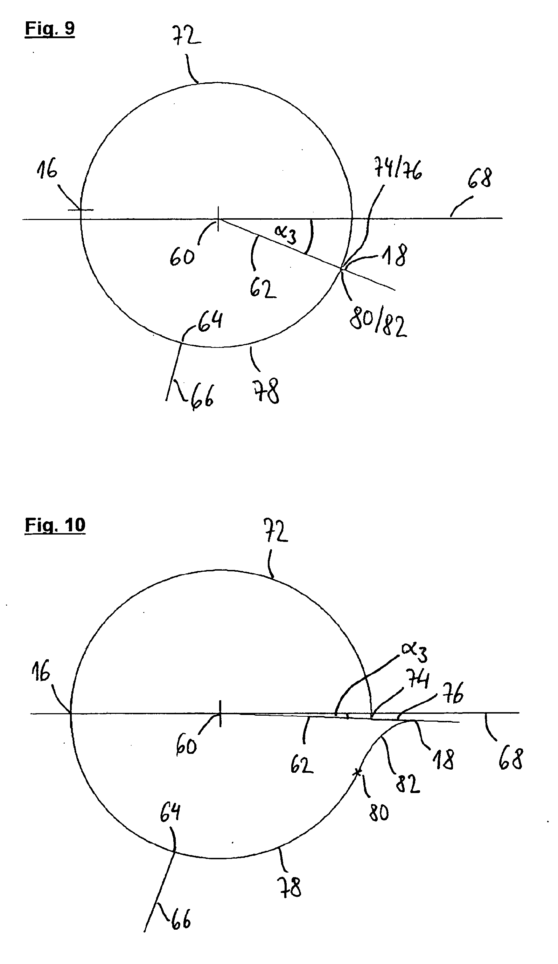

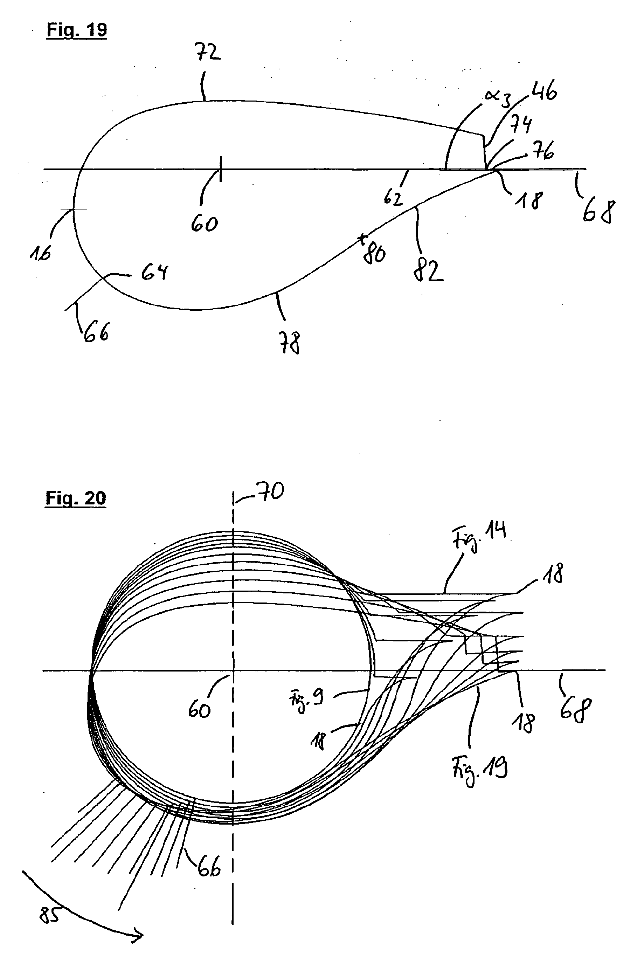

Fig. 8 verdeutlicht anhand einer Draufsicht auf die Saugseite 32 insbesondere die für die Figuren 9 bis 19 gewählten Schnittebenen. Die in diesen Figuren gezeigten Querschnitte decken im Wesentlichen den mit dem Anbauteil 20 versehenen Längsabschnitt des Rotorblatts ab, indem das Rotorblatt ein besonderes Profil aufweist. Der Querschnitt der Fig. 9 verläuft an der Längsposition des bereits erläuterten dritten Querschnitts 24, d.h. am blattwurzelseitigen Ende des Anbauteils 20. Die weiteren Querschnitte der Figuren 10 bis 19 weisen einen zunehmenden Abstand von der Blattwurzel auf, wobei der Querschnitt der Fig. 19 nahe am blattspitzenseitigen Ende des Anbauteils 20, d.h. nahe dem Punkt 44 angeordnet ist. Am Punkt 44, wo das Anbauteil 20 und damit der Längsabschnitt des Rotorblatts mit dem besonderen Profil endet, beträgt die relative Profildicke 60 % oder weniger. Der Punkt 44 ist zudem in einem Abstand von 10 % oder mehr der Rotorblattlänge von der Blattwurzel 12 entfernt.

Der Längsabschnitt des Rotorblatts mit dem besonderen Profil beginnt am dritten Querschnitt 24 in einem Abstand von der Blattwurzel 12 von mindestens 0,5 Metern, im Beispiel in einem Abstand von ungefähr 1 Meter. In der Fig. 8 ebenfalls erkennbar ist die gekrümmte Linie 38, an der die Saugseitenergänzungsfläche 34 in die von den übrigen Komponenten des Rotorblatts gebildeten Teile der Saugseite 30 übergeht.

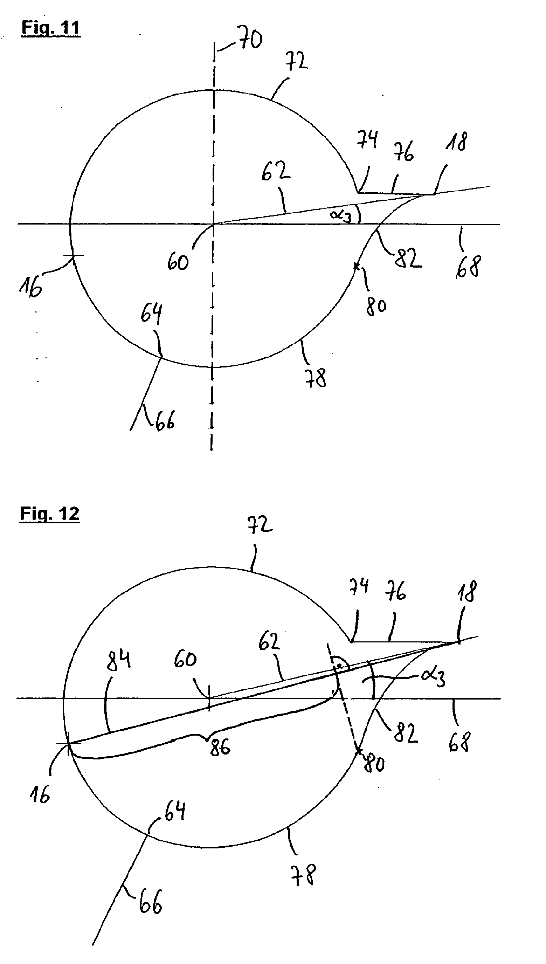

Die Merkmale des besonderen Profils im Bereich des genannten Längsabschnitts werden zunächst anhand der Figur 11 erläutert. In den Querschnitt der Fig. 11 eingezeichnet ist die Position der Längsachse 60 des Rotorblatts etwa in der Mitte des dargestellten Querschnitts, sowie die der Hinterkante 18. Hinterkante 18 und Längsachse 60 werden durch eine Gerade 62 miteinander verbunden. Die Vorderkante 16 des Rotorblatts ist in dem Querschnitt durch ein Kreuz markiert. Weiterhin eingezeichnet ist der vordere Staupunkt 64 des Profils sowie die Auslegungsanströmrichtung 66, die durch eine auf den vorderen Staupunkt 64 weisende Linie gekennzeichnet ist. Weiterhin eingezeichnet ist die Rotorebene 68 als Bezugsebene. Die Rotorebene 68 schließt die Längsachse 60 ein und ist senkrecht zur gestrichelt eingezeichneten Rotorachse 70 ausgerichtet. Es versteht sich, dass die Rotorachse 70 außerhalb der dargestellten Schnittebene liegt.

Das in der Fig. 11 dargestellte Profil weist einen konvexen Saugseitenabschnitt 72 auf, der sich von der Vorderkante 16 bis zu einem saugseitigen Knickpunkt 74 erstreckt. Ein Saugseitenergänzungsabschnitt 76 verläuft geradlinig von dem Knickpunkt 74 zur Hinterkante 18. Die Druckseite des Profils wird gebildet von einem konvexen Druckseitenabschnitt 78, der sich von der Vorderkante 16 bis zu einem druckseitigen Wendepunkt 80 erstreckt, und von einem konkaven Druckseitenergänzungsabschnitt 82, der sich von dem druckseitigen Wendepunkt 80 bis zur Hinterkante 18 erstreckt.

Eine im Bereich der Hinterkante 18 an den konkaven Druckseitenergänzungsabschnitt 82 angelegte Tangente ist in der Richtung der Rotorebene 68 ausgerichtet. In der Richtung der Rotorebene 68 verläuft auch der Saugseitenergänzungsabschnitt 76. Zwischen den an die Hinterkante 18 angrenzenden Enden des Saugseitenergänzungsabschnitts 76 und des Druckseitenergänzungsabschnitts 82 ist in einer nicht beanspruchten Ausgestaltung ein spitzer Winkel ausgebildet.

Der Winkel α₃ ist definiert zwischen der Rotorebene 68 als Bezugsebene und der Geraden 62. Durch den Winkel α₃ wird die Lage der Hinterkante 18 in dem Querschnitt beschrieben.

Die genannten Merkmale sind auch in den übrigen Querschnitten der Figuren 9 bis 19 vorhanden und mit denselben Bezugszeichen versehen. In der Fig. 12 ist ergänzend die Profilsehne 84 eingezeichnet, die von der Vorderkante 16 zur Hinterkante 18 verläuft. Ebenfalls dargestellt ist die Projektion des druckseitigen Wendepunkts 80 auf die Profilsehne 84. Der mit 86 bezeichnete, entlang der Profilsehne 84 gemessene Abstand 86 des druckseitigen Wendepunkts 80 von der Vorderkante 16 beträgt an der in der Fig. 12 gezeigten Längsposition des Rotorblatts ungefähr 75 % der Profiltiefe.

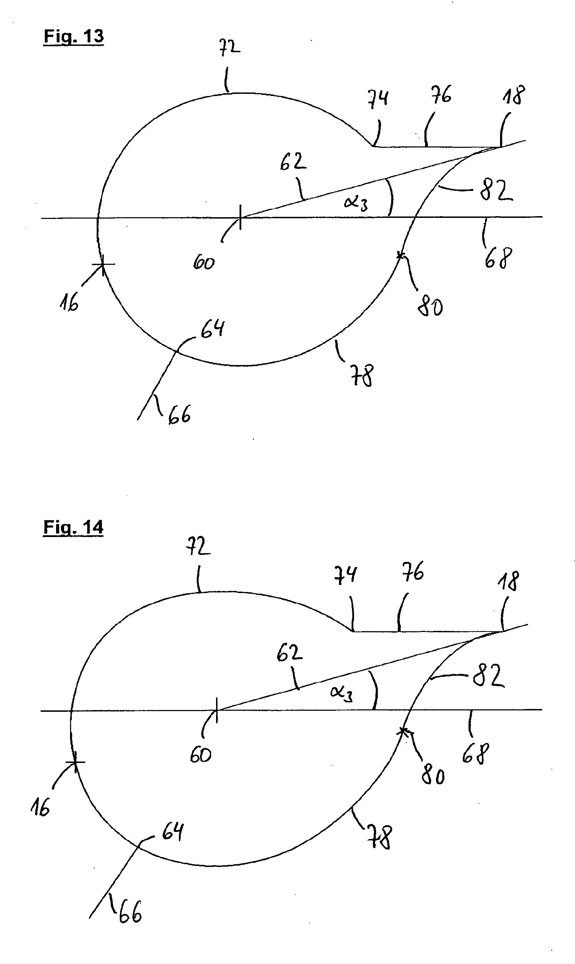

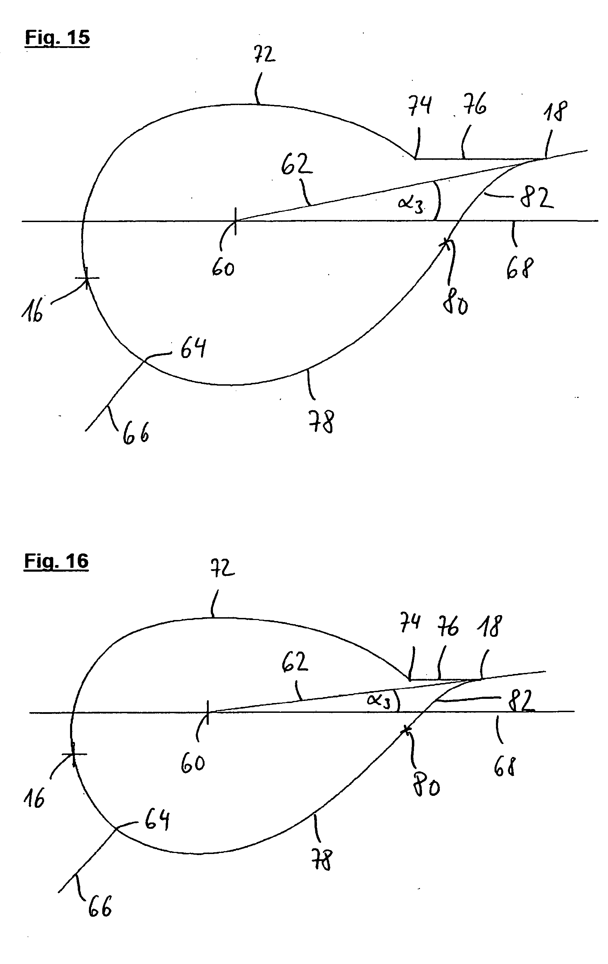

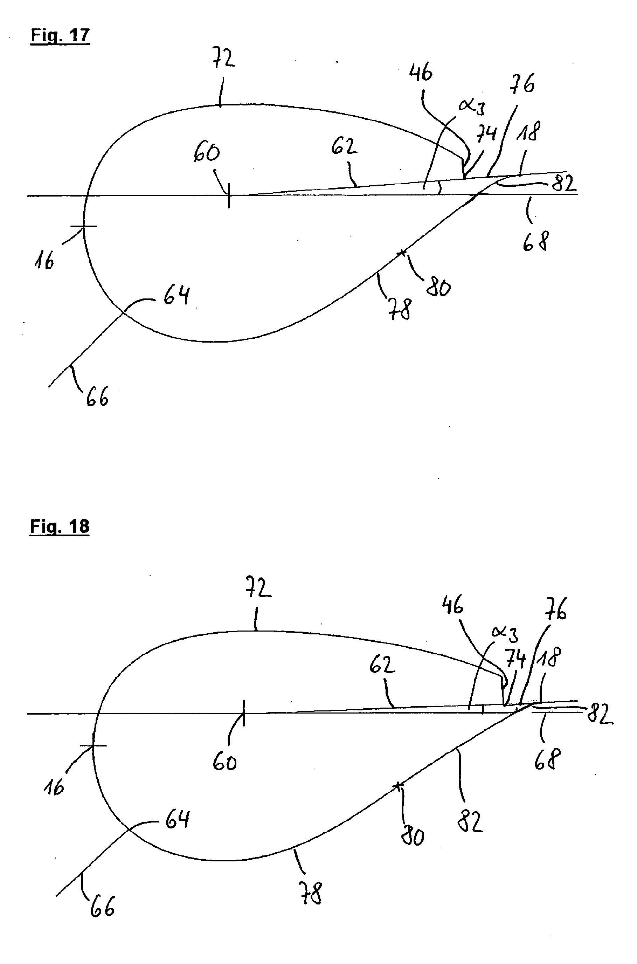

Der Winkel α₃ nimmt an den Längspositionen der in den Figuren 9 bis 19 gezeigten Querschnitte ungefähr die folgenden Werte an: Fig. 9: -22,5°, Fig. 10: - 2°, Fig. 11: 8°, Fig. 12: 13°, Fig. 13: 15,5°, Fig. 14: 16°, Fig. 15: 12°, Fig. 16: 7°, Fig. 17: 3,5°, Fig. 18: 2°, Fig. 19: 0°. Etwa an der Längsposition des Querschnitts der Fig. 14 nimmt der Winkel α₃ somit ein Maximum an. Diese Längsposition entspricht dem zweiten Querschnitt 52. Ausgehend von einer nicht dargestellten Längsposition nahe der Blattspitze nimmt der Winkel α₃ also zur Blattwurzel hin bis zur Längsposition des zweiten Querschnitts 52 streng monoton zu, erreicht am zweiten Querschnitt 52 ein Maximum und nimmt dann bis zum dritten Querschnitt 24 hin streng monoton ab.

Der Querschnitt der Fig. 19 befindet sich an einer Längsposition des Rotorblatts nahe dem blattspitzenseitigen Ende des Anbauteils 20. In dieser Position beträgt die relative Profildicke ungefähr 50 %.

In den Fig. 17, 18 und 19 ist weiterhin die "dicke Hinterkante" der übrigen Komponenten des Rotorblatts erkennbar und mit dem Bezugszeichen 46 versehen. Sie ist zu unterscheiden von der Hinterkante 18 des Rotorblatts.

In der Fig. 20 sind die Querschnitte der Figuren 9 bis 19 mit übereinander liegender Längsachse 60 dargestellt. In dieser Darstellung ist der Übergang von einem annähernd kreisförmigen Querschnitt, wie er in der Fig. 9 dargestellt ist, zu dem Querschnitt der Fig. 19, der bereits weitgehend einem tragflächenartigen, aerodynamischen Profil entspricht, erkennbar. Ebenfalls erkennbar ist die sich mit geringer werdendem Abstand von der Blattwurzel weiter in Richtung zur Rotorachse 70 hin drehende Auslegungsanströmrichtung 66. Dieses Drehen der Auslegungsanströmrichtung 66 ist durch den Pfeil 85 veranschaulicht. Weiterhin lässt sich der Darstellung der Fig. 20 der geschwungene Verlauf der Hinterkante 18, die im Querschnitt der Fig. 14 ein Maximum erreicht, entnehmen.

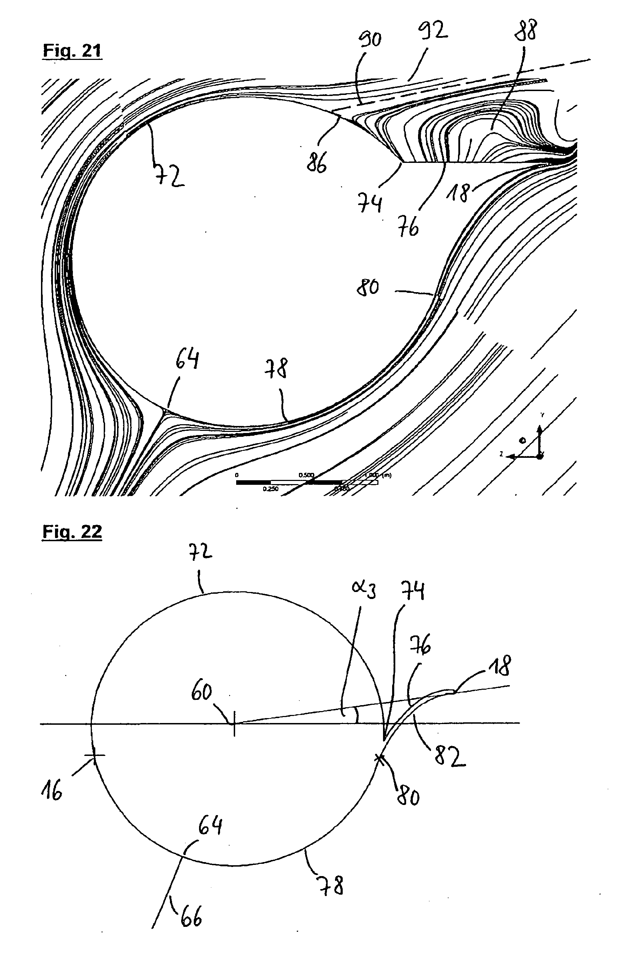

Fig. 21 zeigt in einer Querschnittsebene die sich im Betrieb ausbildende Luftströmung um das Rotorblatt herum. Gut erkennbar ist der vordere Staupunkt 64, an dem sich die Luft in einen über die Saugseite und einen über die Druckseite abströmenden Teil teilt. Im Bereich der Druckseite liegt die Strömung weitestgehend am Profil an. An der Hinterkante 18 strömt sie glatt in Richtung der Rotorebene ab, wiederum bei dem für den Teillastbetrieb optimierten Pitchwinkel. Oberhalb des geradlinigen Saugseitenergänzungsabschnitts 76, beginnend etwa ab dem Punkt 86 des konvexen Saugseitenabschnitts 72, kommt es zu Strömungsablösungen und zur Ausbildung eines verwirbelten Bereichs 88. Die Trennstromlinie 90 trennt den verwirbelten Bereich 88 von der im größeren Abstand vom Saugseitenergänzungsabschnitt 76 wieder laminar verlaufenden Strömung im Bereich 92. Die Trennstromlinie 90 verläuft annähernd parallel zum Saugseitenergänzungsabschnitt 76 und zur Rotorebene.

In der Fig. 22 ist ein weiteres Ausführungsbeispiel eines Rotorblatts in einem Querschnitt gezeigt. Der Querschnitt weist die bereits erläuterten Merkmale auf, die mit den gleichen Bezugszeichen wie im ersten Ausfiihrungsbeispiel bezeichnet sind. Das Anbauteil 20, das die Saugseitenergänzungsfläche 76 und die Druckseitenergänzungsfläche 82 aufweist, ist von einem schalenförmigen Bauteil gebildet. Das schalenförmige Bauteil hat eine gleichmäßige Dicke, so dass sich die Saugseitenergänzungsfläche 76 und die Druckseitenergänzungsfläche 82 in einem konstanten Abstand voneinander befinden. Der Übergang vom Anbauteil 20 zu den übrigen Komponenten des Rotorblatts verläuft am druckseitigen Wendepunkt 80 krümmungsstetig, am saugseitigen Knickpunkt 74 unter Ausbildung eines nach innen weisenden Knicks.

## Patentansprüche

1. Windenergieanlagenrotorblatt mit einer Blattspitze (10), einer Blattwurzel (12), einer Vorderkante (16), einer Hinterkante (18), einer Druckseite (32), einer Saugseite (30) und einem Querschnitt, der sich von der Blattspitze (10) zur Blattwurzel (12) hin ändert, wobei das Windenergieanlagenrotorblatt eine Auslegungsschnelllaufzahl aufweist und in einem Teillastbetrieb bevorzugt mit einem vorgegebenen, optimalen Pitchwinkel betrieben wird, der bei der Auslegungsschnelllaufzahl zu einer optimalen Leistungsaufnahme aus dem Wind führt, wobei der Querschnitt in der Mitte (14) des Rotorblatts von einem aerodynamischen Profil gebildet und an der Blattwurzel (12) kreisförmig ist und der Querschnitt in einem Längsabschnitt des Rotorblatts, der zwischen der Blattwurzel (12) und der Mitte (14) des Rotorblatts angeordnet ist und sich in Richtung zur Mitte (14) des Rotorblatts hin höchstens bis zu einem Abstand von der Blattwurzel (12) erstreckt, in dem die relative Profildicke 40 % beträgt, Folgendes aufweist:
• einen konvexen Druckseitenabschnitt (78), der sich von der Vorderkante (16) bis zu einem druckseitigen Wendepunkt (80) erstreckt,
• einen konkaven Druckseitenergänzungsabschnitt (82), der sich an den druckseitigen Wendepunkt (80) mit stetiger Krümmung anschließt und sich bis zur Hinterkante (18) erstreckt,
• einen konvexen Saugseitenabschnitt (72), der sich von der Vorderkante (16) bis zu einem saugseitigen Knick- oder Wendepunkt (74) erstreckt, und
• einen Saugseitenergänzungsabschnitt (76), der sich von dem saugseitigen Knick- oder Wendepunkt (74) bis zur Hinterkante (18) erstreckt, **dadurch gekennzeichnet, dass**
• eine Tangente an den Druckseitenergänzungsabschnitt (82) an der Hinterkante (18) und eine Tangente an den Saugseitenergänzungsabschnitt (76) an der Hinterkante (18) in der Richtung der Rotorebene liegen, wenn das Rotorblatt den für den Teillastbetrieb optimierten Pitchwinkel aufweist.

2. Windenergieanlagenrotorblatt nach Anspruch 1, **dadurch gekennzeichnet, dass** der Abstand des druckseitigen Wendepunkts (80) von der Vorderkante (16), gemessen entlang der Profilschne (84), mehr als 60 % der Profiltiefe beträgt.

3. Windenergieanlagenrotorblatt nach Anspruch 1 oder 2, **dadurch gekennzeichnet, dass** der Saugseitenergänzungsabschnitt (76) im Wesentlichen geradlinig ist.

4. Windenergieanlagenrotorblatt nach einem der Ansprüche 1 bis 3, **dadurch gekennzeichnet, dass** der Längsabschnitt in einem Abstand von der Blattwurzel (12) beginnt.

5. Windenergieanlagenrotorblatt nach einem der Ansprüche 1 bis 4, **dadurch gekennzeichnet, dass** sich der Längsabschnitt in Richtung zur Mitte (14) des Rotorblatts hin bis zu einem Abstand von der Blattwurzel (12), in dem der Querschnitt eine relative Profildicke von 60 % oder weniger aufweist, erstreckt.

6. Windenergieanlagenrotorblatt nach einem der Ansprüche 1 bis 5, **dadurch gekennzeichnet, dass** sich der Längsabschnitt in Richtung zur Mitte (14) des Rotorblatts hin bis zu einem Abstand von 10 % oder mehr der Rotorblattlänge von der Blattwurzel (12) erstreckt.

7. Windenergieanlagenrotorblatt nach einem der Ansprüche 1 bis 6, **dadurch gekennzeichnet, dass** das Rotorblatt zwischen einem ersten Abstand von 10 % der Rotorblattlänge von der Blattwurzel (12) und einem zweiten Abstand von 15 % der Rotorblattlänge von der Blattwurzel (12) eine konstante Profiltiefe aufweist.

8. Windenergieanlagenrotorblatt nach einem der Ansprüche 1 bis 7, **dadurch gekennzeichnet, dass** der Druckseitenergänzungsabschnitt (82) und der Saugseitenergänzungsabschnitt (76) von einem Anbauteil (20) gebildet sind, das mit den übrigen Komponenten des Rotorblatts verbunden ist.

9. Windenergicanlagenrotorblatt nach Anspruch 8, **dadurch gekennzeichnet, dass** die übrigen Komponenten des Rotorblatts an einer Längsposition (22) des Rotorblatts eine maximale Profiltiefe aufweisen, wobei das Anbauteil (20) an dieser Längsposition (22) beginnt und sich von dort in Richtung zu der Blattwurzel (12) hin erstreckt.

10. Windenergieanlagenrotorblatt nach Anspruch 8, **dadurch gekennzeichnet, dass** die übrigen Komponenten des Rotorblatts an einer Längsposition (22) des Rotorblatts eine maximale Profiltiefe aufweisen, wobei das Anbauteil (20) in einem größeren Abstand von der Blattwurzel (12) beginnt als diese Längsposition (22), sich von dort in Richtung zu der Blattwurzel (12) hin erstreckt und die Profiltiefe des Rotorblatts durch das Anbauteil (20) mindestens in einem Längsabschnitt über die maximale Profiltiefe der übrigen Komponenten hinaus vergrößert wird.

11. Windenergicanlagenrotorblatt nach einem der Ansprüche 8 bis 10, **dadurch gekennzeichnet, dass** das Anbauteil (20) in mehrere Segmente unterteilt ist.

12. Windenergieanlagenrotorblatt nach einem der Ansprüche 8 bis 11, **dadurch gekennzeichnet, dass** das Anbauteil (20) schalenförmig ist.

## Claims

1. A wind turbine rotor blade comprising a blade tip (10), a blade root (12), a leading edge (16), a trailing edge (18), a pressure side (32), a suction side (30) and a cross-section, which changes from the blade tip (10) to the blade root (12), wherein the wind turbine rotor blade comprises a design tip speed ratio and in partial load operation is operated preferably with a predetermined, optimal pitch angle which at the design tip speed ratio leads to an optimal power consumption from the wind, wherein the cross-section in the middle (14) of the rotor blade is formed by an aerodynamic profile and is circular at the blade root (12), and wherein the cross-section in a longitudinal portion of the rotor blade, the longitudinal portion being arranged between the blade root (12) and the middle (14) of the rotor blade and extending in the direction towards the middle (14) of the rotor blade at most up to a distance from the blade root (12) at which the relative profile thickness is 40 %, comprises the following:
• a convex pressure side portion (78), which extends from the leading edge (16) up to a pressure-side inflection point (80),
• a concave pressure side addition portion (82), which connects with the pressure-side inflection point (80) with a continuous curvature and extends up to the trailing edge (18),
• a convex suction side portion (72), which extends from the leading edge (16) up to a suction-side kink or inflection point (74), and
• a suction side addition portion (76), which extends from the suction-side kink or inflection point (74) up to the trailing edge (18), **characterized in that**
• a tangent against the pressure side addition portion (82) at the trailing edge (18) and a tangent against the suction side addition portion (76) at the trailing edge (18) lie in the direction of the rotor plane if the rotor blade has the pitch angle optimized for partial load operation.

2. The wind turbine rotor blade according to claim 1, **characterized in that** the distance from the pressure-side inflection point (80) to the leading edge (16), measured along the profile chord (84), is more than 60% of the profile depth.

3. The wind turbine rotor blade according to claim 1 or 2, **characterized in that** the suction side addition portion (76) is mainly straight.

4. The wind turbine rotor blade according to any of the claims 1 to 3, **characterized in that** the longitudinal portion begins at a distance from the blade root (12).

5. The wind turbine rotor blade according to any of the claims 1 to 4, **characterized in that** the longitudinal portion in the direction towards the middle (14) of the rotor blade extends up to a distance from the blade root (12), in which the cross-section has a relative profile thickness of 60% or less.

6. The wind turbine rotor blade according to any of the claim 1 to 5, **characterized in that** the longitudinal portion in the direction towards the middle (14) of the rotor blade extends up to a distance of 10% or more of the rotor blade length from the blade root (12).

7. The wind turbine rotor blade according to any of the claims 1 to 6, **characterized in that** the rotor blade has a constant profile depth between a first distance of 10% of a rotor blade length from the blade root (12) and a second distance of 15% of the rotor blade length from the blade root (12).

8. The wind turbine rotor blade according to any of the claims 1 to 7, **characterized in that** the pressure side addition portion (82) and the suction side addition portion (76) are formed by an attachment (20), which is connected with the remaining components of the rotor blade.

9. The wind turbine rotor blade according to claim 8, **characterized in that** remaining components of the rotor blade at a longitudinal position (22) of the rotor blade have a maximum profile depth, wherein the attachment (20) begins at this longitudinal position (22) and extends from there in a direction towards the blade root (12).

10. The wind turbine rotor blade according to claim 8, **characterized in that** remaining components of the rotor blade at a longitudinal position (22) of the rotor blade have a maximum profile depth, wherein the attachment (20) begins at a greater distance from the blade root (12) than this longitudinal position (22) and extends from there in the direction towards the blade root (12) and the profile depth of the rotor blade is enlarged by the attachment (20) beyond the maximum profile depth of the remaining components at least in a longitudinal portion.

11. The wind turbine rotor blade according to any of the claims 8 to 10, **characterized in that** the attachment (20) is subdivided into several segments.

12. The wind turbine rotor blade according to any of the claim 8 to 11, **characterized in that** the attachment (20) is formed like a shell.

## Revendications

1. Pale de rotor d'éolienne, avec une pointe de pale (10), un pied de pale (12), un bord avant (16), un bord arrière (18), un côté pression (32), un côté aspiration (30) et une section transversale qui varie de la pointe de pale (10) au pied de pale (12), la pale de rotor d'éolienne présentant une vitesse spécifique de calcul et fonctionnant dans une marche en charge partielle de préférence avec un angle de pas optimal prédéfini qui, pour la vitesse spécifique de calcul, conduit à une puissance absorbée optimale à partir du vent, la section transversale au milieu (14) de la pale de rotor étant formée d'un profil aérodynamique et étant circulaire au niveau du pied de pale (12), et la section transversale, dans un tronçon longitudinal de la pale de rotor qui est disposé entre le pied de pale (12) et le milieu (14) de la pale de rotor et qui s'étend en direction du milieu (14) de la pale de rotor au maximum jusqu'à une distance du pied de pale (12) dans laquelle l'épaisseur de profil relative est de 40%, présentant les éléments suivants :
• un tronçon de côté de pression (78) convexe qui s'étend du bord avant (16) jusqu'à un point tournant (80) côté pression,
• un tronçon complémentaire du côté pression (82) concave qui se raccorde, avec une courbure constante, au point tournant (80) côté pression et s'étend jusqu'au bord arrière (18),
• un tronçon de côté aspiration (72) convexe qui s'étend du bord avant (16) jusqu'à un point tournant ou d'inflexion (74) côté aspiration, et
• un tronçon complémentaire du côté aspiration (76) qui s'étend du point tournant ou d'inflexion (74) côté aspiration jusqu'au bord arrière (18), **caractérisée en ce**
• **qu'**une tangente au tronçon complémentaire du côté pression (82) sur le bord arrière (18) et une tangente au tronçon complémentaire du côté aspiration (76) sur le bord arrière (18) sont situées dans la direction du plan de rotor quand la pale de rotor présente l'angle de pas optimisé pour la marche en charge partielle.

2. Pale de rotor d'éolienne selon la revendication 1, **caractérisée en ce que** la distance séparant le point tournant (80) côté pression et le bord avant (16), mesurée le long de la corde de profil (84), représente plus de 60 % de la profondeur de profil.

3. Pale de rotor d'éolienne selon la revendication 1 ou 2, **caractérisée en ce que** le tronçon complémentaire du côté aspiration (76) est essentiellement rectiligne.

4. Pale de rotor d'éolienne selon une des revendications 1 à 3, **caractérisée en ce que** le tronçon longitudinal commence à distance du pied de pale (12).

5. Pale de rotor d'éolienne selon une des revendications 1 à 4, **caractérisée en ce que** le tronçon longitudinal s'étend en direction du milieu (14) de la pale de rotor jusqu'à une distance du pied de pale (12) à laquelle la section transversale présente une épaisseur de profil relative de 60 % ou moins.

6. Pale de rotor d'éolienne selon une des revendications 1 à 5, **caractérisée en ce que** le tronçon longitudinal s'étend en direction du milieu (14) de la pale de rotor jusqu'à une distance du pied de pale (12) qui est égale à 10 % ou plus de la longueur de pale de rotor.

7. Pale de rotor d'éolienne selon une des revendications 1 à 6, **caractérisée en ce que** la pale de rotor présente une profondeur de profil constante entre une première distance du pied de pale (12) qui est égale à 10 % de la longueur de pale de rotor et une deuxième distance du pied de pale (12) qui est égale à 15% de la longueur de pale de rotor.

8. Pale de rotor d'éolienne selon une des revendications 1 à 7, **caractérisée en ce que** le tronçon complémentaire du côté pression (82) et le tronçon complémentaire du côté aspiration (76) sont formés d'une pièce rapportée (20) qui est raccordée aux autres composants de la pale de rotor.

9. Pale de rotor d'éolienne selon la revendication 8, **caractérisée en ce que** les autres composants de la pale de rotor présentent, au niveau d'une position longitudinale (22) de la pale de rotor, une profondeur de profil maximale, la pièce rapportée (20) commençant au niveau de cette position longitudinale (22) et s'étendant de là en direction du pied de pale (12).

10. Pale de rotor d'éolienne selon la revendication 8, **caractérisée en ce que** les autres composants de la pale de rotor présentent, au niveau d'une position longitudinale (22) de la pale de rotor, une profondeur de profil maximale, la pièce rapportée (20) commençant à une plus grande distance du pied de pale (12) que cette position longitudinale (22), s'étendant de là en direction du pied de pale (12), et la profondeur de profil de la pale de rotor étant augmentée par la pièce rapportée (20) au moins dans un tronçon longitudinal au-delà de la profondeur de profil maximale des autres composants.

11. Pale de rotor d'éolienne selon une des revendications 8 à 10, **caractérisée en ce que** la pièce rapportée (20) est divisée en plusieurs segments.

12. Pale de rotor d'éolienne selon une des revendications 8 à 11, **caractérisée en ce que** la pièce rapportée (20) est en forme de coque.
